(19) Europäisches Patentamt
European Patent Office
Office européen des brevets

(11) **EP 4 489 458 A1**

(12) **EUROPEAN PATENT APPLICATION**
published in accordance with Art. 153(4) EPC

(43) Date of publication:
**08.01.2025  Bulletin 2025/02**

(51) International Patent Classification (IPC):
***H04W 12/033*** (2021.01)

(21) Application number: 23773926.3

(52) Cooperative Patent Classification (CPC):
**H04W 12/033; H04W 12/041; H04W 12/106;
H04W 24/08; H04W 72/23; H04W 74/00;
H04W 74/08**

(22) Date of filing: 22.03.2023

(86) International application number:
**PCT/CN2023/083123**

(87) International publication number:
**WO 2023/179679 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  24.03.2022  CN 202210296528

(71) Applicant: **Huawei Technologies Co., Ltd.
Shenzhen, Guangdong 518129 (CN)**

(72) Inventors:
• **XIANG, Hongyu
Shenzhen, Guangdong 518129 (CN)**

• **CHEN, Lei
Shenzhen, Guangdong 518129 (CN)**
• **CUI, Yang
Shenzhen, Guangdong 518129 (CN)**
• **WU, Yizhuang
Shenzhen, Guangdong 518129 (CN)**
• **LEI, Ao
Shenzhen, Guangdong 518129 (CN)**
• **LI, Ruijie
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **CHANNEL KEY-BASED ENCRYPTION METHOD AND APPARATUS**

(57) This application relates to the field of communication technologies, and provides a channel key-based encryption method and an apparatus, to resolve a problem in the conventional technology that a terminal cannot avoid an attack from a false base station before a security mode is enabled, and a security risk exists in data transmission. The method includes: A network device broadcasts a system information block, indicating that channel key generation is supported, where the system information block includes a preamble and a resource configuration of a physical random access channel; receives, on the physical random access channel, a first message from a user equipment, where the first message includes the preamble; sends a second message to the user equipment, where the second message includes configuration information of a first time-frequency resource; receives, on the first time-frequency resource, a third message from the user equipment; and performs channel measurement based on the third message, to obtain a channel key, where the channel key is for performing data encryption and integrity protection between the network device and the user equipment before a security mode is enabled.

FIG. 8

EP 4 489 458 A1

## Description

This application claims priority to Chinese Patent Application No. 202210296528.2, filed with the China National Intellectual Property Administration on March 24, 2022 and entitled "CHANNEL KEY-BASED ENCRYPTION METHOD AND APPARATUS", which is incorporated herein by reference in its entirety.

## TECHNICAL FIELD

This application relates to the field of communication technologies, and in particular, to a channel key-based encryption method and an apparatus.

## BACKGROUND

Currently, a common means for threatening wireless communication security is an attack from a false base station. The false base station is an unauthorized base station, and may usually include a simple wireless device and dedicated open-source software. The false base station simulates a base station to send signaling to a target terminal, to obtain related information of the target terminal, and may further intercept communication content between the base station and the target terminal, to monitor private data of a user.

To ensure communication security between the base station and the terminal, after the terminal initially accesses the base station, the base station may enable a security mode, and send, to the terminal, parameters such as an encryption key and an integrity protection key key for implementing integrity protection, so that during subsequent signaling exchange between the base station and the terminal, transmitted data may be encrypted based on the encryption key, to implement data encryption and air interface integrity protection. The air interface integrity protection means that a transmitter may obtain a message authentication code for integrity (message authentication code for integrity, MAC-I) based on a parameter that changes regularly and transmitted data by using a specific operation. Correspondingly, a receiver may obtain a message authentication code for integrity (expected MAC-I, XMAC-I) through calculation based on a same parameter by using a same rule, to determine, by checking the MAC-I and the XMAC-I, whether received data is complete, so as to protect data integrity.

However, currently, before the base station sends the encryption key and the integrity protection key key to the terminal, data encryption and integrity protection are not performed on signaling exchanged between the base station and the terminal. Therefore, the false base station can eavesdrop on the signaling, for example, obtains network slice type information. In addition, after the security mode is enabled, the false base station may further initiate an attack in a man-in-the-middle attack manner, to transparently transmit upper-layer encrypted signaling through the false base station or a false terminal, or initiate an attack in a packet discarding manner. This affects service experience of a user. In this case, it is very difficult for the terminal to identify existence of the attack.

## SUMMARY

This application provides a channel key-based encryption method and apparatus, to resolve a problem in the conventional technology that a terminal cannot avoid an attack from a false base station before a security mode is enabled, and a security risk exists in data transmission.

To achieve the foregoing objective, this application uses the following technical solutions.

According to a first aspect, a channel key-based encryption method is provided, and is applied to a network device. The method includes: broadcasting a system information block, indicating that channel key generation is supported, where the system information block includes a preamble and a resource configuration of a physical random access channel; receiving, on the physical random access channel, a first message from a user equipment, where the first message includes the preamble; sending a second message to the user equipment, where the second message includes configuration information of a first time-frequency resource; receiving, on the first time-frequency resource, a third message from the user equipment; and performing channel measurement based on the third message, to obtain a channel key, where the channel key is for performing data encryption and integrity protection between the network device and the user equipment before a security mode is enabled.

According to the foregoing method, in a random access process, channel key generation capabilities are aligned between the user equipment and the network device, and the user equipment and the network device respectively generate channel keys based on the channel measurement, so that before the security mode is enabled, the user equipment and the network device may perform information encryption and data integrity protection by using the generated channel keys, to ensure communication security.

In a possible implementation, the method further includes: determining, based on the first message, that the user equipment has a channel key generation capability.

According to the foregoing method, the network device configures a dedicated PRACH resource and/or a dedicated preamble for a user in the broadcast system information block, so that when the user equipment has the channel key generation capability, the user equipment can send the first message by using the dedicated PRACH resource configured by the network device, and the network device can determine the channel key generation capability of the user equipment based on the first message, to improve flexibility of performing security protection by two communication parties based on the channel key.

In a possible implementation, the performing channel measurement based on the third message, to obtain a channel key specifically includes: performing channel measurement based on a demodulation reference signal in the second message, to obtain the channel key.

According to a second aspect, a channel key-based encryption method is provided, and is applied to a user equipment. The method includes: receiving a system information block, where the system information block indicates that a network device supports channel key generation, and the system information block includes a preamble and a resource configuration of a physical random access channel; sending, on the physical random access channel, a first message to the network device, where the first message includes the preamble; receiving a second message from the network device, where the second message includes configuration information of a first time-frequency resource; performing channel measurement based on the second message, to obtain a channel key, where the channel key is for performing data encryption and integrity protection between the network device and the user equipment before a security mode is enabled; and sending, on the first time-frequency resource, a third message to the network device.

According to the foregoing method, in a random access process, channel key generation capabilities are aligned between the user equipment and the network device, and the user equipment and the network device respectively generate channel keys based on the channel measurement, so that before the security mode is enabled, the user equipment and the network device may perform information encryption and data integrity protection by using the generated channel keys, to ensure communication security.

In a possible implementation, the performing channel measurement based on the second message, to obtain a channel key specifically includes: performing channel measurement based on a demodulation reference signal in the second message, to obtain the channel key.

According to a third aspect, a channel key-based encryption method is provided, and is applied to a user equipment. The method includes: sending first notification information to a network device, where the first notification information indicates that the user equipment has a channel key generation capability; receiving channel key configuration information from the network device, where the channel key configuration information includes configuration information of a reference signal and key quantization and calibration methods; performing channel measurement based on the reference signal, to obtain a first channel key; and obtaining a first target key based on the first channel key and an encryption key configured by the network device, where the first target key is for performing data encryption and integrity protection between the network device and the user equipment; or encrypting the first channel key based on an encryption key configured by the network device, and sending, to the network device, the first channel key encrypted by using the encryption key; or receiving a second channel key that is from the network device and that is used by the network device to verify a channel key, where the second channel key is encrypted by using an encryption key.

According to the foregoing method, channel key generation capabilities are aligned in a process in which the user equipment exchanges a user equipment support capability with the network device, and a dedicated reference signal is configured for generating a channel key. In information exchange between the user equipment and the network device, the generated channel key and an encryption key configured by a higher layer may be combined to perform encryption, to complete encrypted transmission and integrity protection of data. Alternatively, the user equipment and the network device may exchange respective generated channel keys and perform verification, so that man-in-the-middle detection can be effectively identified, and an information security risk such as packet discarding can be avoided.

In a possible implementation, before the sending first notification information to a network device, the method includes: receiving first request information from the network device, where the first request information is for requesting the user equipment to report whether the channel key generation capability is supported.

According to the foregoing method, the user equipment can report the channel key generation capability of the user equipment to the network device based on a request of the network device, so that flexibility of aligning the channel key generation capabilities between the user equipment and the network device is improved, communication security is improved based on the channel key, and a man-in-the-middle attack is avoided.

In a possible implementation, before the sending first notification information to a network device, the method includes: successfully setting up an RRC connection to the network device, to receive the encryption key and an integrity protection key from the network device.

In a possible implementation, the method further includes: decrypting a received message based on the first target key, and discarding a packet of the message if the decryption fails.

According to the foregoing method, for data exchange between the user equipment and the network device, an upgraded version of the encryption key may be obtained by combining the respective channel keys and the encryption key configured by the higher layer, to improve security of data encryption. It can be learned from a channel key generation feature that, if a man-in-the-middle attack exists, a channel key on a side of a false base station or a false terminal is inconsistent with those of two normal communication parties, so that the man-in-the-middle attack can be effectively avoided, and the communication security is improved.

In a possible implementation, the channel key configuration information further includes at least one of preset duration or a preset threshold, the preset duration is a threshold that is of packet discarding duration and that is for determining whether a security attack exists, and the preset threshold is a threshold that is of a quantity of discarded packets and that is for determining whether the security attack exists.

In a possible implementation, the method further includes: if a quantity of discarded packets within the preset duration reaches or exceeds the preset threshold, sending alarm information to the network device, indicating that the security attack exists.

In a possible implementation, the method further includes: if it is determined that the first channel key does not match the second channel key, sending alarm information to the network device, indicating that a security attack exists.

According to the foregoing method, the user equipment and the network device exchange the respective generated channel keys. It can be learned from the channel key generation feature that, if the man-in-the-middle attack exists, the channel key obtained by the side of the false base station or the false terminal is inconsistent with channel keys obtained by the two normal communication parties, so that the man-in-the-middle attack can be effectively avoided, and the communication security is improved.

In a possible implementation, the channel key configuration information further includes a preset periodicity, indicating a time interval for updating the channel key.

According to a fourth aspect, a channel key-based encryption method is provided, and is applied to a network device. The method includes: receiving first notification information from a user equipment, where the first notification information indicates that the user equipment has a channel key generation capability; sending channel key configuration information to the user equipment, where the channel key configuration information includes configuration information of a reference signal and key quantization and calibration methods; performing channel measurement based on the reference signal, to obtain a second channel key; and obtaining a second target key based on the second channel key and an encryption key configured for the user equipment, where the second target key is for performing data encryption and integrity protection between the network device and the user equipment; or encrypting the second channel key based on an encryption key, and sending, to the user equipment, the second channel key encrypted by using the encryption key; or receiving a first channel key that is from the user equipment and that is used by the network device to verify a channel key, where the first channel key is encrypted by using an encryption key.

In a possible implementation, before the receiving first notification information from a user equipment, the method further includes: sending first request information to the network device, where the first request information is for requesting the user equipment to report whether the channel key generation capability is supported.

In a possible implementation, before the receiving first notification information from a user equipment, the method further includes: successfully setting up an RRC connection to the user equipment, to send a corresponding encryption key and integrity protection key to the user equipment.

In a possible implementation, the method further includes: decrypting a received message based on the second target key, and discarding a packet of the message if the decryption fails.

In a possible implementation, the channel key configuration information further includes at least one of preset duration or a preset threshold, the preset duration is a threshold that is of packet discarding duration and that is for determining whether a security attack exists, and the preset threshold is a threshold that is of a quantity of discarded packets and that is for determining whether the security attack exists.

In a possible implementation, the method further includes: if a quantity of discarded packets within the preset duration reaches or exceeds the preset threshold, determining that the security attack exists.

In a possible implementation, the method further includes: if it is determined that the first channel key does not match the second channel key, determining that a security attack exists.

In a possible implementation, the channel key configuration information further includes a preset periodicity, indicating a time interval for updating the channel key.

According to a fifth aspect, a communication apparatus is provided. The communication apparatus includes a receiving module, a sending module, and a processing module. The sending module is configured to broadcast a system information block, indicating that channel key generation is supported, where the system information block includes a preamble and a resource configuration of a physical random access channel. The receiving module is further configured to receive, on the physical random access channel, a first message from a user equipment, where the first message includes the preamble. The sending module is further configured to send a second message to the user equipment, where the second message includes configuration information of a first time-frequency resource. The receiving module is further configured to receive, on the first time-frequency resource, a third message from the user equipment. The processing module is configured to perform channel measurement based on the third message, to obtain a channel key, where the channel key is for performing data encryption and integrity protection between a network device and the user equipment before a security mode is enabled.

According to the foregoing method,

in a possible implementation, the method further includes: determining, based on the first message, that the user equipment has a channel key generation capability.

In a possible implementation, the processing module is specifically configured to perform channel measurement based on a demodulation reference signal in the second message, to obtain the channel key.

According to a sixth aspect, a communication apparatus is provided. The communication apparatus includes a receiving module, a sending module, and a processing module. The receiving module is configured to receive a system information block, where the system information block indicates that a network device supports channel key generation, and the system information block includes a preamble and a resource configuration of a physical random access channel. The sending module is configured to send, on the physical random access channel, a first message to the network device, where the first message includes the preamble. The receiving module is configured to receive a second message from the network device, where the second message includes configuration information of a first time-frequency resource. The processing module is configured to perform channel measurement based on the second message, to obtain a channel key, where the channel key is for performing data encryption and integrity protection between the network device and the user equipment before a security mode is enabled. The sending module is configured to send, on the first time-frequency resource, a third message to the network device.

In a possible implementation, the processing module is specifically configured to perform channel measurement based on a demodulation reference signal in the second message, to obtain the channel key.

According to a seventh aspect, a communication apparatus is provided. The communication apparatus includes a sending module, configured to send first notification information to a network device, where the first notification information indicates that a user equipment has a channel key generation capability; a receiving module, configured to receive channel key configuration information from a network device, where the channel key configuration information includes configuration information of the reference signal and key quantization and calibration methods; and a processing module, configured to perform channel measurement based on the reference signal, to obtain a first channel key. The processing module is further configured to obtain a first target key based on the first channel key and an encryption key configured by the network device, where the first target key is for performing data encryption and integrity protection between the network device and the user equipment. Alternatively, the processing module is configured to encrypt the first channel key based on an encryption key configured by the network device, and the sending module is configured to send, to the network device, the first channel key encrypted by using the encryption key. Alternatively, the receiving module is configured to receive a second channel key from the network device, where the second channel key is used by the communication apparatus to verify a channel key, and the second channel key is encrypted by using an encryption key.

In a possible implementation, the receiving module is further configured to receive first request information from the network device, where the first request information is for requesting the user equipment to report whether the channel key generation capability is supported.

In a possible implementation, the receiving module is further configured to successfully set up an RRC connection to the network device, to receive the encryption key and an integrity protection key from the network device.

In a possible implementation, the processing module is further configured to decrypt a received message based on the first target key, and discard the message if decryption fails.

In a possible implementation, the channel key configuration information further includes at least one of preset duration or a preset threshold, the preset duration is a threshold that is of packet discarding duration and that is for determining whether a security attack exists, and the preset threshold is a threshold that is of a quantity of discarded packets and that is for determining whether the security attack exists.

In a possible implementation, if a quantity of discarded packets within the preset duration reaches or exceeds the preset threshold, the sending module is configured to send alarm information to the network device, indicating that the security attack exists.

In a possible implementation, if it is determined that the first channel key does not match the second channel key, the sending module is configured to send alarm information to the network device, indicating that a security attack exists.

In a possible implementation, the channel key configuration information further includes a preset periodicity, indicating a time interval for updating the channel key.

According to an eighth aspect, a communication apparatus is provided. The communication apparatus includes: a receiving module, configured to receive first notification information from a user equipment, where the first notification information indicates that the user equipment has a channel key generation capability; a sending module, configured to send channel key configuration information to the user equipment, where the channel key configuration information includes configuration information of a reference signal and key quantization and calibration methods; and a processing module, configured to perform channel measurement based on the reference signal, to obtain a second channel key. The processing module is further configured to obtain a second target key based on the second channel key and an encryption key configured for the user equipment, where the second target key is for performing data encryption and integrity protection between the network device and the user equipment. Alternatively, the processing module is further configured to encrypt the second channel key based on an encryption key, and the sending module is configured to send, to the user equipment, the second channel key encrypted by using the encryption key. Alternatively, the receiving module is configured to receive a first channel key from the user equipment, where the first channel key is used by the communication apparatus to verify a channel key, and the first channel key is encrypted by using an encryption key.

In a possible implementation, the sending module is further configured to send first request information to the network device, where the first request information is for requesting the user equipment to report whether the channel key generation capability is supported.

In a possible implementation, the sending module is further configured to successfully set up an RRC connection to the user equipment, to send a corresponding encryption key and integrity protection key to the user equipment.

In a possible implementation, the processing module is further configured to decrypt a received message based on the second target key, and discard the message if decryption fails.

In a possible implementation, the channel key configuration information further includes at least one of preset duration or a preset threshold, the preset duration is a threshold that is of packet discarding duration and that is for determining whether a security attack exists, and the preset threshold is a threshold that is of a quantity of discarded packets and that is for determining whether the security attack exists.

In a possible implementation, the processing module is further configured to: if a quantity of discarded packets within the preset duration reaches or exceeds the preset threshold, determine that the security attack exists.

In a possible implementation, the processing module is further configured to: if it is determined that the first channel key does not match the second channel key, determine that a security attack exists.

In a possible implementation, the channel key configuration information further includes a preset periodicity, indicating a time interval for updating the channel key.

According to a ninth aspect, a communication apparatus is provided. The communication apparatus includes a processor and a transmission interface. The processor is configured to execute instructions stored in a memory, to enable the apparatus to perform the method according to any one of the implementations of the first aspect.

According to a tenth aspect, a communication apparatus is provided. The communication apparatus includes a processor and a transmission interface. The processor is configured to execute instructions stored in a memory, to enable the apparatus to perform the method according to any one of the implementations of the second aspect.

According to an eleventh aspect, a communication apparatus is provided. The communication apparatus includes a processor and a transmission interface. The processor is configured to execute instructions stored in a memory, to enable the apparatus to perform the method according to any one of the implementations of the third aspect.

According to a twelfth aspect, a communication apparatus is provided. The communication apparatus includes a processor and a transmission interface. The processor is configured to execute instructions stored in a memory, to enable the apparatus to perform the method according to any one of the implementations of the fourth aspect.

According to a thirteenth aspect, a computer-readable storage medium is provided, and includes a program or instructions. When the program or the instructions is or are run by a processor, the method according to any one of the implementations of the first aspect is performed.

According to a fourteenth aspect, a computer-readable storage medium is provided, and includes a program or instructions. When the program or the instructions is or are run by a processor, the method according to any one of the implementations of the second aspect is performed. According to a fifteenth aspect, a computer-readable storage medium is provided, and includes a program or instructions. When the program or the instructions is or are run by a processor, the method according to any one of the implementations of the third aspect is performed.

According to a sixteenth aspect, a computer-readable storage medium is provided, and includes a program or instructions. When the program or the instructions is or are run by a processor, the method according to any one of the implementations of the fourth aspect is performed.

According to a seventeenth aspect, a computer program product is provided. When the computer program product runs on a computer or a processor, the computer or the processor is enabled to perform the method according to any one of the implementations of the first aspect.

According to an eighteenth aspect, a computer program product is provided. When the computer program product runs on a computer or a processor, the computer or the processor is enabled to perform the method according to any one of the implementations of the second aspect.

According to a nineteenth aspect, a computer program product is provided. When the computer program product runs on a computer or a processor, the computer or the processor is enabled to perform the method according to any one of the implementations of the third aspect.

According to a twentieth aspect, a computer program product is provided. When the computer program product runs on a computer or a processor, the computer or the processor is enabled to perform the method according to any one of the implementations of the fourth aspect.

According to a twenty-first aspect, a communication system is provided. The communication system includes the apparatus according to any one of the implementations of the fifth aspect and the apparatus according to any one of the implementations of the sixth aspect.

According to a twenty-second aspect, a communication system is provided. The communication system includes the apparatus according to any one of the implementations of the seventh aspect and the apparatus according to any one of the implementations of the eighth aspect.

It may be understood that the communication method, the communication apparatus, the communication system, the computer-readable storage medium, the computer program product, or the like provided above may be implemented by using the corresponding method provided above. Therefore, for beneficial effects that can be achieved by the communication method, the communication apparatus, the communication system, the computer-readable storage medium, the computer program product, or the like, refer to the beneficial effects in the corresponding method provided above. Details are not described herein again.

**BRIEF DESCRIPTION OF DRAWINGS**

FIG. 1 is a diagram of an attack from a false base station according to an embodiment of this application;

FIG. 2 is a diagram of a man-in-the-middle attack according to an embodiment of this application;

FIG. 3 is a diagram of a key generation method based on a channel measurement result;

FIG. 4 is a diagram of a structure of system information;

FIG. 5A is a diagram of a random access encrypted transmission process according to an embodiment of this application;

FIG. 5B is a diagram of an integrity protection algorithm according to an embodiment of this application;

FIG. 6 is a diagram of an architecture of a communication system according to an embodiment of this application;

FIG. 7 is a diagram of a structure of a communication apparatus according to an embodiment of this application;

FIG. 8 is a schematic flowchart of a channel key-based encryption method according to an embodiment of this application;

FIG. 9 is a diagram of a structure of a message according to an embodiment of this application;

FIG. 10 is a schematic flowchart of another channel key-based encryption method according to an embodiment of this application;

FIG. 11 is a diagram of identifying a man-in-the-middle attack based on a channel key according to an embodiment of this application; and

FIG. 12 is a diagram of a structure of a communication apparatus according to an embodiment of this application.

**DESCRIPTION OF EMBODIMENTS**

The terms "first" and "second" mentioned below are merely intended for a purpose of description, and shall not be understood as an indication or implication of relative importance or implicit indication of a quantity of indicated technical features. Therefore, a feature defined with "first" or "second" may explicitly or implicitly include one or more features. In descriptions of embodiments, unless otherwise specified, "a plurality of" means two or more than two.

It should be noted that in this application, the term such as "example" or "for example" represents giving an example, an illustration, or a description. Any embodiment or design scheme described as an "example" or "for example" in this application should not be explained as being more preferred or having more advantages than another embodiment or design scheme. To be precise, use of the word such as "example", "for example", or the like is intended to present a relative concept in a specific manner.

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

First, related technologies in this application are briefly described.

1. An attack from a false base station means that a network attacker places an unauthorized base station in a coverage area of a target base station, and the false base station can force a nearby target terminal to perform cell reselection, location update, and cell handover, to deceive the terminal, or provide error information to the terminal, so as to achieve an objective of spreading viruses, carrying out a network fraud, or the like.

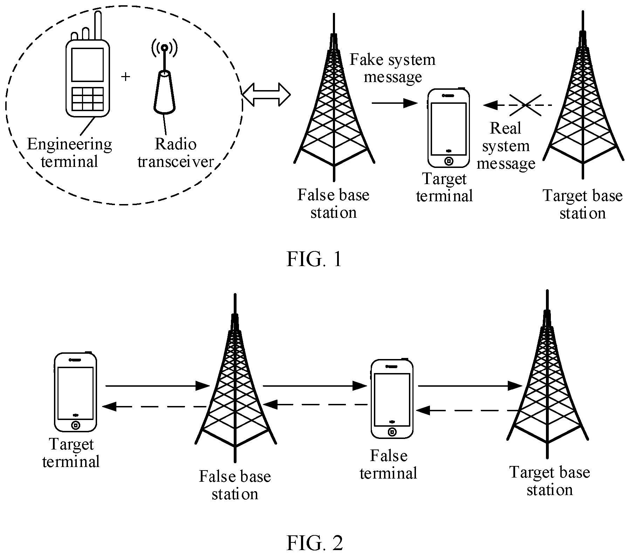

For example, as shown in FIG. 1, the false base station may include an engineering computer/engineering mobile phone, a cable, a wireless transceiver, and the like, and is disguised as a base station of a mobile communication operator, to inveigle the terminal and initiate an attack. As shown in FIG. 1, the attack from the false base station may be initiated by forging a system message, and the fake system message overwrites a real system message in a network. Consequently, the target terminal denies a service of the target base station. In addition, the false base station may further inveigle the terminal into initiating a network registration or location update request to the false base station, to attract the target terminal to camp on the false base station, and extract information about the terminal. In this case, the terminal is disconnected from a normal network and cannot obtain a network service. The false base station may further perform information transfer with the terminal and so on. For example, the false base station sends a fraud message, a malicious network link, an abusive message, or the like to the terminal.

The false base station may further intercept communication data between the target base station and the terminal, to monitor private data of a user. When the false base station initiates a spoofing attack on the terminal, normal communication between the network and the terminal is further interfered with, and network performance is affected.

2. A man-in-the-middle attack means that a false base station transparently transmits, in combination with a false terminal, encrypted data between a terminal and a network in a relay and forwarding form, to implement identity authentication, and tamper with data to initiate an attack. As shown in FIG. 2, on an uplink over which a target terminal transmits data to a target base station, the false base station receives communication data of the target terminal, and transparently transmits the communication data to the target base station through the false terminal. Correspondingly, on a downlink over which the target base station transmits data to the target terminal, the false terminal receives communication data of an authorized base station, and transparently transmits the received data to the target terminal through the false base station.

In this process, it is very difficult for the target terminal and the target base station to perceive existence of the false base station and the false terminal. If integrity protection is not performed on the communication data between the target terminal and the target base station, an attack such as data tampering or packet discarding may occur.

In addition, in a fifth generation (fifth generation, 5G) communication technology, some new application scenarios emerge, and the 5G technology may be introduced into a private network, for example, an industrial park, a multicast service network, or an enterprise private network in an industrial internet. In these scenarios, a security requirement of the terminal is higher. Therefore, a security problem caused by the false base station is severer. For example, if a terminal in the industry cannot perform normal communication, great losses and a security accident are caused. In addition, mobility of such a terminal is low, and once the terminal accesses the false base station, the terminal cannot leave the false base station for long time to access a normal base station.

3. A wireless channel key generation technology is a technology in the field of physical layer security, where a security key does not need to be distributed and set, but a same key is shared between two communication parties by using a property of a wireless channel, to ensure communication security.

In time division duplex (time division duplex, TDD) communication in a wireless communication system, two communication parties send and receive data in different time periods, but uplink transmission and downlink transmission are performed at a same frequency. Uplink and downlink signals experience similar environments in a wireless channel, and have short-time reciprocity. Therefore, shared information of a common channel of the two communication parties is extracted, to generate an encryption key. Based on the short-term reciprocity of the channel, channel features measured by the two communication parties at a same moment are the same, and the channel feature may be used as a random source for generating a key. In addition, because a communication channel changes with time, an obtained channel key is automatically updated, and an updated key is unpredictable for an eavesdropper.

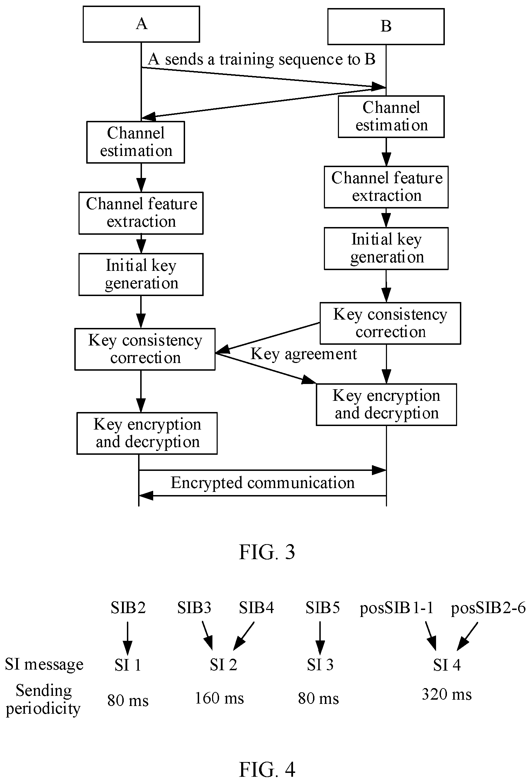

For example, FIG. 3 shows a key generation method based on a channel measurement result. Keys are respectively generated between A and B based on channel measurement results, and a process mainly includes: channel estimation, channel feature extraction, initial key generation, key consistency correction, and key encryption and decryption.

In a stage of the channel estimation, A sends a training sequence to B. For example, the training sequence may be specifically a demodulation reference signal (Demodulation Reference Signal, DMRS). B receives the training sequence and performs channel estimation, to obtain a measurement result $Y_B$. B sends a training sequence to A, and A receives the training sequence and performs channel estimation, to obtain $Y_A$. Because channels do not change within channel coherence time, theoretically, results obtained through respective channel estimation are as follows:

$$Y_A = Y_B.$$

After obtaining the channel measurement results, A and B may respectively perform channel feature extraction by using a same method. A used channel feature may include a received signal power (Received Signal Strength, RSS), an envelope, a phase, or the like. An initial key is generated based on the extracted channel feature. A side of A is used as an example. When the extracted channel feature is the RSS, A may determine values such as 0 and 1 through comparison between the RSS and a threshold, and use a string of bit values obtained through a plurality of times of comparison as an initial key $K_A$. Correspondingly, a side of B obtains an initial key $Y_B$ based on a same channel feature extraction method. Theoretically, $Y_A = Y_B$. However, due to a measurement error and other problems that actually exist, the obtained initial keys $K_A$ and $K_B$ may not be equal. Therefore, key consistency correction needs to be performed, to check and change unequal bits in the initial keys $K_A$ and $K_B$. Finally, A and B can obtain equal bit streams $G_A$ and $G_B$, and the bit streams are used as an encryption key to implement encrypted communication between A and B.

4. System information (System Information, SI): A terminal achieves downlink synchronization with a cell by searching for the cell, obtains a physical cell identifier (Physical-layer-Cell Identity, PCI) of the cell, and then obtains SI of the cell, to access the cell based on a cell configuration and normally operate in the cell.

The system information mainly includes: a master information block (Master Information Block, MIB), a plurality of system information blocks (System Information Blocks, SIBs), and a positioning system information block (positioning SIB, posSIB). Each piece of system information includes a set of a series of parameters related to a function. In a current standard protocol, 14 types of SIBs are defined: a SIB1, a SIB2, ..., and a SIB14.

For example, the SIB1 is transmitted on a downlink shared channel (Downlink Shared Channel, DL-SCH), and a periodicity is 160 ms. In this 160 mode, a base station transmits the SIB1 in a configurable transmission repetition periodicity. A default transmission repetition periodicity of the SIB 1 is 20 ms, but an actual transmission repetition periodicity depends on a network implementation. The SIB 1 includes a configuration parameter used for random access. For example, a configuration parameter of a physical random access channel (Physical Random Access Channel, PRACH) may be obtained by using the following path:

SIB1->ServingCell ConfigCommonSIB-> UplinkConfigCommonSIB->BWP-UplinkCommon->RACH-ConfigCommon.

SIBs other than the SIB1 may also be referred to as other system information (Other System Information, OSI). The OSI or a posSIB may be sent by using an SI message, and each piece of OSI or each posSIB can be included in only one SI message, but OSI or a posSIB with a same periodicity may be encapsulated into a same SI message for periodic sending. As shown in FIG. 4, different SIBs with a same periodicity may be encapsulated into a same SI message.

5. Random access and air interface integrity protection:

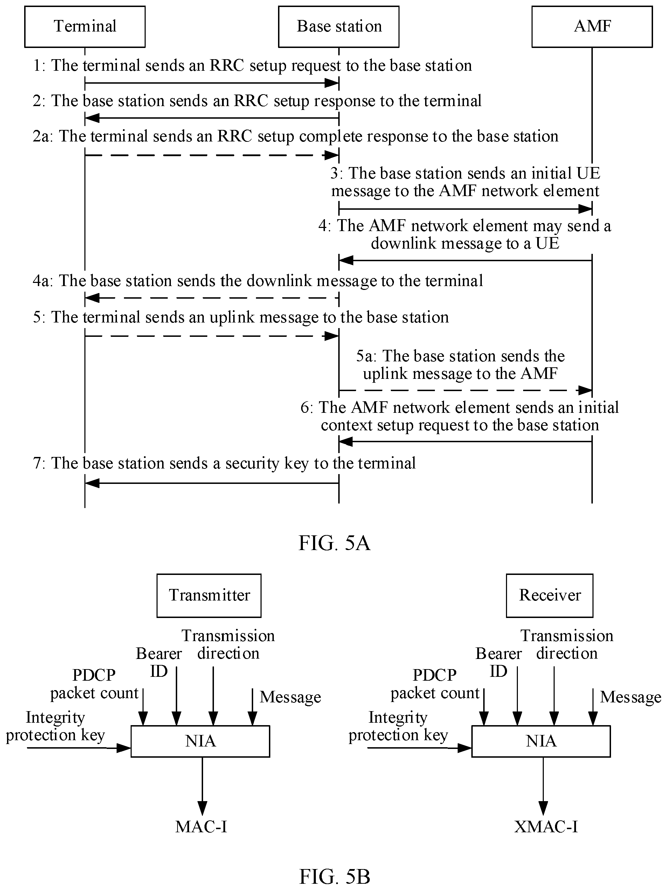

As shown in FIG. 5A, when a terminal changes from an idle state to a connected state, the terminal needs to interact with an access network device to complete a random access process (two-step random access or four-step random access). Then, a security mode is enabled, and communication between the terminal and the access network device is encrypted and transmitted by using a security key, including data encryption and air interface integrity protection.

For example, the process may include the following steps.

Step 1: The terminal sends an RRC setup request to a base station.

The terminal in the idle IDLE state initiates initial access, and sends RRCSetupRequest to the base station.

Step 2: The base station sends an RRC setup response to the terminal.

The base station receives RRCSetupRequest from the terminal, and feeds back RRCSetupResponse to the terminal.

Optionally, the process may further include the following steps.

Step 2a: The terminal sends an RRC setup complete response to the base station.

In other words, the terminal sends RRCSetupComplete to the base station.

Step 3: The base station sends an initial UE message to an AMF network element.

In other words, the base station sends an Initial UE message to the AMF network element.

Then, the UE may interact with an access and mobility management function (core access and mobility management function, AMF) network element by using a non-access stratum (Non-Access Stratum, NAS) message. The base station may serve as a relay, to transparently transmit the NAS message. In this process, the AMF network element may perform data transmission with the UE through relay of the base station. For example, a downlink NAS message sent by the AMF network element is forwarded by the base station to the UE, and an uplink NAS message received by the AMF network element is forwarded by the base station to the UE.

Optionally, the process may further include the following steps.

Step 4: The AMF network element may send a downlink message to the base station.

Step 4a: The base station sends the downlink message to the terminal.

For example, the base station sends a DLInformationTransfer message to the terminal.

Step 5: The terminal sends an uplink message to the base station.

For example, the terminal sends a ULInformationTransfer message to the base station.

For example, the DLInformationTransfer message and the ULInformationTransfer message may usually include information such as network slice type information, a 5G-GUTI, a security parameter, or 4G tracking area update (Tracking Area Update, TAU).

Step 5a: The base station sends the uplink message to the AMF.

Step 6: The AMF network element sends an initial context setup request to the base station.

For example, the AMF network element sends an Initial Context Setup Request message to the base station. The AMF may send, to the base station, context data of the terminal, where the context data includes a PDU session context, a security key, a radio capability and a security capability of the terminal, and the like. After receiving the message, the base station enables a security mode.

Step 7: The base station sends the security key to the terminal.

In other words, the base station enables the security mode, and sends, to the terminal, parameters such as an encryption key and an air interface integrity protection key that are configured by a core network for the terminal.

As shown in FIG. 5B, input parameters of an integrity protection algorithm may include an integrity protection key KEY, a PDCP packet count COUNT, a bearer ID BEARER, a transmission direction DIRECTION, and a message, namely, MESSAGE. A transmitter may calculate a 32-bit (where a 128-bit algorithm is used as an example) message check code MAC-I based on these input parameters by using an integrity protection algorithm NIA. Then, the MAC-I is appended to a message when the message is sent. A receiver may calculate an expected check code XMAC-I corresponding to the received message by using a same algorithm, and verify integrity of the received message by comparing the MAC-I with the XMAC-I.

It can be learned from the foregoing process that, the terminal can obtain the encryption key and the integrity protection key KEY only after the security mode is enabled in step 7. Therefore, before the security mode is enabled, no encryption protection or integrity verification is performed on information exchanged between the base station and the terminal, so that a false base station can eavesdrop on information that exists before the security mode is enabled. For example, the false base station discloses network slice type information and a security parameter.

In addition, after the security mode is enabled, the false base station may further form a man-in-the-middle by combining with a false terminal, and initiate an attack by transparently transmitting upper-layer encrypted signaling, or directly initiate an attack in a packet discarding manner. However, in this case, it is very difficult for the terminal and the base station to find existence of the false base station or the false terminal through self-detection, and this affects user experience. Then, an implementation environment and an application scenario of embodiments of this application are briefly described.

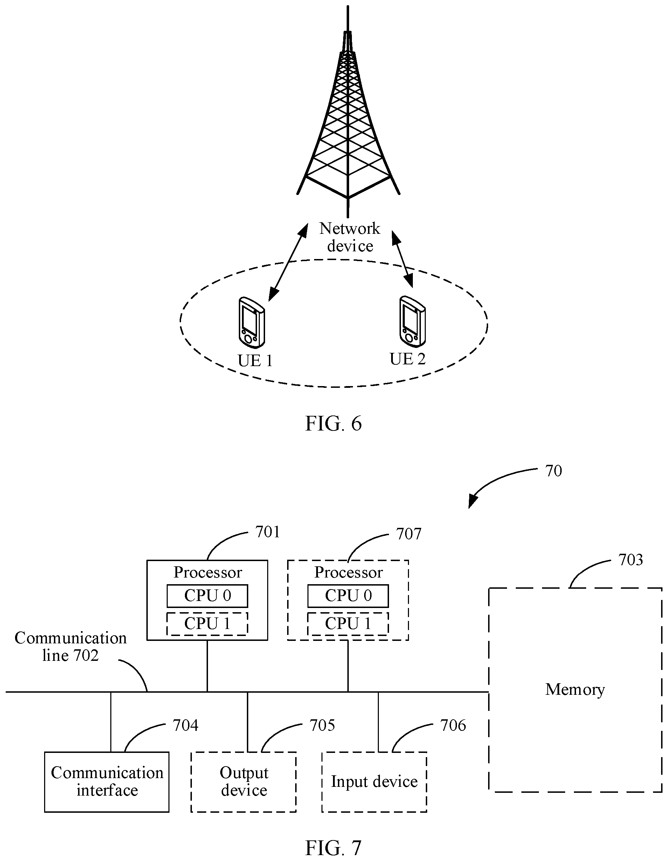

FIG. 6 is a diagram of an implementation environment of a channel key-based encryption method according to an embodiment of this application. In an embodiment of this application, a communication system is provided. The system may include a network device and at least one user equipment. For example, the system includes a UE 1. Optionally, the system may further include a UE 2. The user equipment may be located in a cell coverage area of the network device, or may be located outside a cell coverage area of the network device.

The network device may be any device having a wireless transceiver function, and is mainly configured to implement functions such as a radio physical control function, resource scheduling and radio resource management, radio access control, and mobility management. Specifically, the network device may be an access network (access network, AN) device/a radio access network (radio access network, RAN) device, or may be a device including a plurality of 5G-AN/5G-RAN nodes, or may be a NodeB (NodeB, NB), an evolved NodeB (evolved NodeB, eNB), a next generation NodeB (generation NodeB, gNB), a transmission reception point (transmission reception point, TRP), a transmission point (transmission point, TP), a roadside unit (roadside unit, RSU), any node in another type of access node, or the like. This is not limited.

The user equipment may be a mobile phone (mobile phone), a tablet computer (Pad), a computer having a wireless transceiver function, a vehicle-mounted terminal, a virtual reality (virtual reality, VR) terminal device, an augmented reality (augmented reality, AR) terminal device, a wireless terminal in industrial control (industrial control), a wireless terminal in self-driving (self-driving), an RSU, a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network, a terminal device in a future evolved public land mobile network (public land mobile network, PLMN), or the like. The application scenario is not limited in embodiments of this application. In the following implementations of this application, an example of the user equipment is used for description.

It may be understood that FIG. 6 is merely a diagram, and does not constitute a limitation on the application scenario of the technical solutions provided in this application. A person skilled in the art should understand that, in a specific implementation process, the communication system may include fewer devices or network elements than those shown in FIG. 6, or the communication system may further include another device or another network element, and a quantity of devices or a quantity of network elements in the communication system may alternatively be determined based on a specific requirement.

Optionally, each network element in FIG. 6 in this embodiment of this application may be a functional module in a device. It may be understood that the foregoing function may be a network element in a hardware device, for example, a communication chip in a mobile phone, a software function running on dedicated hardware, or a virtualized function instantiated on a platform (for example, a cloud platform).

For example, each network element in FIG. 6 may be implemented by a communication apparatus 700 in FIG. 7. FIG. 7 is a diagram of a hardware structure of a communication apparatus applicable to an embodiment of this application. The communication apparatus 700 includes at least one processor 701, a communication line 702, a memory 703, and at least one communication interface 704.

The processor 701 may be a general-purpose central processing unit (central processing unit, CPU), a microprocessor, an application-specific integrated circuit (application-specific integrated circuit, ASIC), or one or more integrated circuits configured to control program execution in the solutions in this application.

The communication line 702 may include a path for transferring information between the foregoing components, for example, a bus.

The communication interface 704 is any apparatus such as a transceiver, is configured to communicate with another device or a communication network, and is, for example, an Ethernet interface, a RAN interface, or a wireless local area network (wireless local area network, WLAN) interface.

The memory 703 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction structure or a data structure and that is accessible to a computer, but is not limited thereto. The memory may independently exist and is connected to the processor through the communication line 702. The memory may alternatively be integrated with the processor. The memory provided in embodiments of this application may be usually non-volatile. The memory 703 is configured to store computer-executable instructions for executing the solutions in this application, and execution is controlled by the processor 701. The processor 701 is configured to execute the computer-executable instructions stored in the memory 703, to implement the method provided in embodiments of this application.

Optionally, the computer-executable instructions in this embodiment of this application may also be referred to as application program code. This is not specifically limited in this embodiment of this application.

In a specific implementation, in an embodiment, the processor 701 may include one or more CPUs, for example, a CPU 0 and a CPU 1 in FIG. 7.

In a specific implementation, in an embodiment, the communication apparatus 700 may include a plurality of processors, for example, the processor 701 and a processor 707 shown in FIG. 7. Each of the processors may be a single-core processor (single-CPU), or may be a multi-core processor (multi-CPU). The processor herein may be one or more devices, circuits, and/or processing cores configured to process data (for example, computer program instructions).

In a specific implementation, in an embodiment, the communication apparatus 700 may further include an output device 705 and an input device 706. The output device 705 communicates with the processor 701, and may display information in a plurality of manners. For example, the output device 705 may be a liquid crystal display (liquid crystal display, LCD), a light emitting diode (light emitting diode, LED) display device, a cathode ray tube (cathode ray tube, CRT) display device, or a projector (projector). The input device 706 communicates with the processor 701, and may receive an input from a user in a plurality of manners. For example, the input device 706 may be a mouse, a keyboard, a touchscreen device, or a sensing device.

The communication apparatus 700 may be a general-purpose device or a dedicated device. In a specific implementation, the communication apparatus 700 may be a portable computer, a network server, a palmtop computer (personal digital assistant, PDA), a mobile phone, a tablet computer, a wireless terminal, an embedded device, or a device having a structure similar to that in FIG. 7. A type of the communication apparatus 700 is not limited in embodiments of this application.

The following specifically describes the channel key-based encryption method provided in embodiments of this application.

It should be noted that names of messages between network elements, names of parameters in the messages, or the like in the following embodiments of this application are merely examples, and there may be other names in a specific implementation. This is not specifically limited in embodiments of this application.

It may be understood that some or all of steps in embodiments of this application are merely examples. Other steps or variations of various steps may be further performed in embodiments of this application. In addition, the steps may be performed in a sequence different from a sequence presented in embodiments of this application, and not all the steps in embodiments of this application need to be performed.

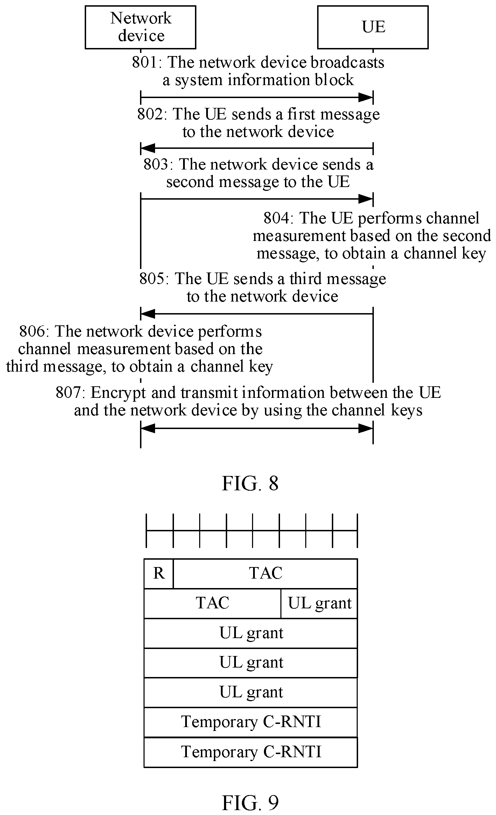

FIG. 8 shows a channel key-based encryption method according to an embodiment of this application. In a process in which a UE randomly accesses a network, channel key generation capabilities are aligned and a channel key is generated, so that before a security mode is enabled, information encryption can be performed by using the generated channel key, uplink and downlink information encryption and data integrity protection can be completed between a base station and the UE, and a false base station can be effectively prevented from eavesdropping, to improve communication security.

801: A network device broadcasts a system information block.

The system information block SIB may indicate that channel key generation is supported. For example, a channel key generation function indication bit is newly added to the SIB. The channel key generation function indication bit is set to 1, to indicate that the network device supports a channel key generation capability. Alternatively, the SIB includes a dedicated preamble and/or a dedicated resource configuration of a physical random access channel PRACH, for performing channel key generation. Optionally, existence of the dedicated resource configuration of the PRACH may implicitly indicate that the network device supports a channel key generation capability. The resource configuration of the PRACH may include random access parameters such as a RACH occasion (RO) used for random access, a beam direction associated with each RO, an RA response window length, and a power boost step.

Correspondingly, the UE may receive the system information block broadcast by the network device, and obtain the dedicated preamble and/or the resource configuration of the PRACH indicated in the SIB.

802: The UE sends a first message to the network device.

The first message is Msg1, namely, the 1st message in a random access process, indicating an access request.

If the UE has the channel key generation capability, the UE may send the first message by using a dedicated PRACH resource configured by the network device in step 801. If the UE does not have the channel key generation capability, the UE may request to access the network device by using an existing PRACH resource configured by the network device for the UE, where a preamble in Msg1 is not the dedicated preamble of the SIB broadcast by the network device in step 801, and a time-frequency resource for sending Msg1 is not the dedicated PRACH resource configured in the SIB broadcast by the network device in step 801.

In other words, if the preamble included in the first message sent by the UE to the network device is the dedicated preamble included in the SIB broadcast by the network device in step 801, and the first message is sent on the dedicated PRACH resource configured in the SIB broadcast by the network device in step 801, the network device determines that the UE also supports the channel key generation capability.

Therefore, if the UE has the channel key generation capability, the first message includes the dedicated preamble in the SIB broadcast by the network device in step 801.

Correspondingly, the network device receives the first message from the UE, and determines, based on the first message, that the UE has the channel key generation capability.

803: The network device sends a second message to the UE.

The second message may be specifically the 2nd message Msg2, namely, a random access response (Random Access Response, RAR), in the random access process, and the second message may indicate scheduling information of the 3rd message Msg3 in the random access process.

Therefore, the second message may include configuration information of a first time-frequency resource. The first time-frequency resource may be a time-frequency resource configuration for sending Msg3.

In addition, as shown in FIG. 9, the second message further includes a timing advance command (Timing Advance Command, TAC), a UL grant (UL Grant), and a cell radio network temporary identifier (Cell Radio Network Temporary Identifier, C-RNTI). The TAC is for uplink synchronization. The UL grant is for uplink scheduling resource authorization, to determine a time-frequency resource location, a power, and the like for Msg3 transmission. The C-RNTI is a C-RNTI temporarily allocated by the network device to the UE, and is for Msg3 transmission on a side of the UE.

Correspondingly, the UE receives the second message.

804: The UE performs channel measurement based on the second message, to obtain a channel key.

Specifically, the UE may generate the channel key based on a signal included in the second message and based on the foregoing key generation method based on a channel measurement result. In an implementation, the UE may perform channel measurement based on a demodulation reference signal (Demodulation Reference Signal, DMRS) in the second message, to generate the channel key.

The channel key may be for performing data encryption and integrity protection between the network device and the UE before the security mode is enabled.

805: The UE sends a third message to the network device.

Specifically, the UE may send, on the first time-frequency resource configured in the Msg2 from the network device, the third message Msg3.

Correspondingly, the network device may receive, on the first time-frequency resource, the third message from the user equipment.

806: The network device performs channel measurement based on the third message, to obtain a channel key.

Specifically, the network device may generate the channel key based on a signal included in the third message and based on the foregoing key generation method based on a channel measurement result.

For example, the network device performs channel measurement based on a DMRS in the third message, to generate the channel key.

In the foregoing implementation, in the random access process, channel key generation capabilities are aligned between the UE and the network device, and the UE and the network device respectively generate channel keys based on the channel measurement, so that before the security mode is enabled, the UE and the network device may perform information encryption and data integrity protection by using the generated channel keys, to ensure the communication security.

Therefore, the method may further include step 807.

807: Encrypt and transmit information between the UE and the network device by using the channel keys.

In other words, before the security mode is enabled, that is, before the UE obtains an encryption key configured by the network device, the UE may perform data transmission with the network device by using the channel key.

In an implementation, the DLInformationTransfer message or the ULInformationTransfer message in FIG. 5A is encrypted by using the channel key for transmission, to protect information such as a network slice type in the DLInformationTransfer message or the ULInformationTransfer message, and avoid an information leakage.

For example, the network device may generate a MAC-I by using content of the DLInformationTransfer message and the channel key as input parameters. Integrity protection verification may be performed on an entire DLInformation-Transfer message, or integrity protection verification may be performed based on some fields in the DLInformation-Transfer message. After receiving the DLInformationTransfer message, the UE generates a MAC-X based on a same operation, and then compares the MAC-I with the MAC-X. If the UE determines that the MAC-I and the MAC-X are the same, the integrity protection verification succeeds. If the MAC-I and the MAC-X are different, it is considered that the message is tampered with, and content carried in the message is not to be used. A specific implementation method for key encryption and integrity protection is not limited in this embodiment of this application.

In addition, an embodiment of this application further provides a channel key-based encryption method. Channel key generation capabilities are aligned in a process in which a UE exchanges a UE support capability with a network device, and a dedicated reference signal is configured for generating a channel key. In information exchange between the UE and the network device, a channel key and an encryption key configured by a higher layer may be combined, to complete data encryption and integrity protection, so that man-in-the-middle detection can be effectively identified, and an information security risk such as packet discarding can be avoided.

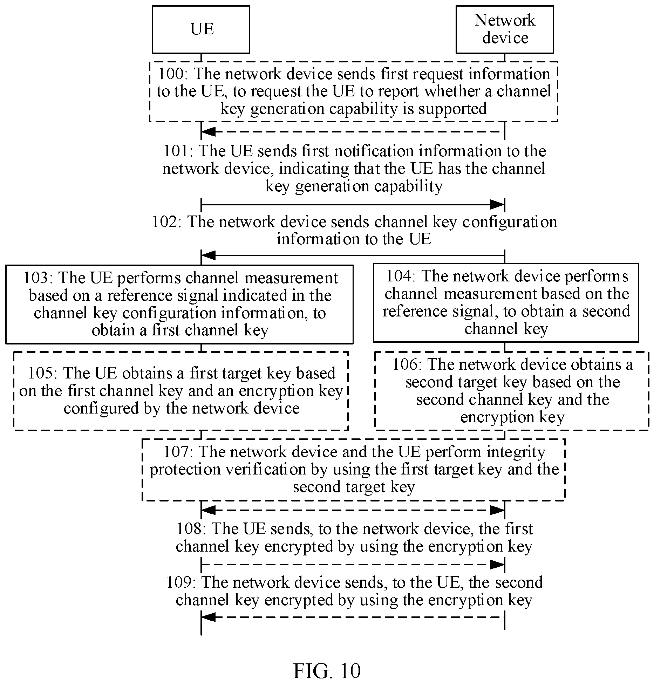

As shown in FIG. 10, the method may include the following steps.

101: The UE sends first notification information to the network device, indicating that the UE has a channel key generation capability.

It should be noted that the embodiment in FIG. 10 of this application is a solution on the basis that a security mode is enabled. To be specific, before step 101, the UE accesses a network, successfully sets up an RRC connection to the network device, and enables the security mode, to obtain parameters such as an encryption key configured by the network and an integrity protection key. In an implementation, the first notification information may be UE assistance information, or the first notification information may be carried in UE assistance information (UE Assistance Information). Therefore, after completing an RRCReconfiguration process, the UE may actively notify the network device by using a UE Assistance Information message that the UE supports the channel key generation capability. Therefore, the network device sends channel key configuration information to the UE, and the network device and the UE then respectively generate channel keys, and subsequently, may perform a process such as encrypted transmission by using the generated channel keys. In addition, the first notification information may alternatively be carried in another message. This is not specifically limited in this application.

In this case, if the network device (for example, a base station) does not support the channel key generation capability, the network device may not send the channel key configuration information to the UE.

In another implementation, the UE may alternatively passively report the channel key generation capability of the UE to the network device. In other words, after receiving a message that is from the network device and that indicates a UE capability enquiry, the UE feeds back, to the network device, an indication indicating whether the UE has the channel key generation capability.

In this case, before step 101, the method may further include the following step:

100: The network device sends first request information to the UE, to request the UE to report whether the channel key generation capability is supported.

For example, the first request information may be carried in a UE capability enquiry message (UECapabilityEnquiry message), or the first request information may be specifically the UECapabilityEnquiry message. The first request information is for requesting to learn of a specific capability of the UE, specifically including requesting whether the UE has the channel key generation capability. The first request information may alternatively be carried in another message. This is not specifically limited in this application.

Optionally, the network device may further notify, by using UECapabilityEnquiry, the UE that the network device supports a channel key capability.

In this implementation, in step 101, the first notification information sent by the UE to the network device may be carried in UE capability information (UECapabilityInformation), so that the network device may determine, by using the received UECapabilityInformation, that the UE supports the channel key generation capability.

In this case, if the UE does not support the channel key generation capability, the UE sends second notification information to the network device, where the second notification message may indicate that the UE does not have the channel key generation capability. Therefore, after determining, based on the received second notification information, that the UE does not support the channel key generation capability, the network device may not send the channel key configuration information to the UE.

In another implementation, channel key capabilities may alternatively be aligned between the UE and the network device in the manner of step 801 in FIG. 8. To be specific, the network device may indicate a dedicated preamble and/or a dedicated resource configuration of a PRACH by using a SIB, and then the UE may perform random access by using a dedicated resource configured in the SIB, so that the network device can determine, in an access process of the UE, whether the UE supports the channel key generation capability.

102: The network device sends the channel key configuration information to the UE.

When both the network device and the UE have the channel key generation capability, the network device may send the channel key configuration information to the UE.

For example, the channel key configuration information may be carried in an RRC reconfiguration RRCReconfiguration message. In addition, the channel key configuration information may alternatively be carried in another message. This is not specifically limited in this embodiment of this application.

The channel key configuration information may include configuration information of a reference signal.

The configuration information of the reference signal indicates configuration information of a reference signal configured by the network device for generating a channel key for the UE. For specific included content, refer to configuration information of existing reference information, for example, a channel state information-reference signal (CSI-RS).

In an implementation, the configuration information of the reference signal may include parameters such as a reference signal scrambling code ID, power control, and a periodicity. In addition, the configuration information of the reference signal may further include a configuration function indication. For example, if a bit of the configuration function indication is 1, it indicates that the reference signal is used for channel key generation, or if a bit of the configuration function indication is 0, it indicates that the reference signal is not used for channel key generation.

In an implementation, the configuration information of the reference signal may further include at least one of a key quantization method or a key calibration method. The key quantization method indicates a related quantization algorithm in a channel key generation process. For details, refer to a related technology in the art. For example, specifically, in the key quantization method, a 0/1 bit sequence may be generated as a key based on a received signal power RSS.

The key calibration method indicates a related key calibration algorithm in the channel key generation process. For details, refer to a related technology in the art. For example, in the calibration method, error correction may be performed on unequal bits based on a method such as a low density parity check code (Low Density Parity Check Code, LDPC), to ensure that channel keys generated on a side of the network device and a side of the UE are consistent.

Correspondingly, the UE receives the channel key configuration information from the network device, and obtains the configuration information of the reference signal indicated in the channel key configuration information, the key quantization and calibration method, and the like.

In addition, in an implementation, the channel key configuration information may further include at least one of a preset periodicity, preset duration, or a preset threshold.

The preset threshold is a threshold corresponding to a quantity of discarded packets. For example, the UE may determine, by determining whether the quantity of discarded packets reaches or exceeds the preset threshold, whether a security attack exists in the UE in this case.

The preset duration is a threshold for determining duration corresponding to the quantity of discarded packets. For example, the UE may determine, by determining whether the quantity of discarded packets within the preset duration reaches or exceeds the preset threshold, whether the security attack exists in the UE in this case.

The preset periodicity indicates a time interval for updating the channel key. To be specific, the network device indicates, to the UE, that after usage duration of the channel key reaches or exceeds the time interval indicated by the preset periodicity, a new channel key needs to be generated between the network device and the UE. Therefore, the channel key is updated periodically, so that a risk of a leakage and cracking caused by using a same channel key for long time can be reduced, and communication security is improved.

A specific application process of the preset periodicity, the preset duration, or the preset threshold in the foregoing channel key configuration information is described below with reference to use of the channel key, and details are not described herein.

103: The UE performs channel measurement based on the reference signal indicated in the channel key configuration information, to obtain a first channel key.

The UE may perform channel measurement based on the reference signal and based on the foregoing wireless channel key generation technology, to obtain the first channel key.

104: The network device performs channel measurement based on the reference signal, to obtain a second channel key.

The network device may perform channel measurement based on the reference signal and based on the foregoing wireless channel key generation technology, to obtain the second channel key.

In this case, the network device and the UE may identify a man-in-the-middle attack by using channel keys respectively generated by the network device and the UE, to improve the communication security. Specific implementations may include the following three manners.

In a first manner, the channel key and an encryption key configured by a higher layer are combined, to upgrade integrity protection verification.

105: The UE obtains a first target key based on the first channel key and the encryption key configured by the network device.

For example, the first channel key may be a key 1, the encryption key configured by the network device may be K, and the first target key f(key 1, K) may be obtained based on a preset algorithm, where the first target key may be for performing data encryption and integrity protection between the network device and the user equipment.

106: The network device obtains a second target key based on the second channel key and the encryption key.

Correspondingly, the network device may also combine the channel key and the encryption key to obtain the target key based on a same method as that on the side of the UE. For example, the second channel key may be a key 2, the encryption key configured by the network device may be K, and the second target key f(key 2, K) may be obtained based on a preset algorithm, where the second target key may be for performing data encryption and integrity protection between the network device and the user equipment.

If no man-in-the-middle attack exists, the network device and the UE perform measurement based on a same reference channel. Therefore, the generated channel keys are the same, to be specific, the first channel key and the second channel key are consistent. In addition, the encryption key configured by the higher layer for the UE is determined. Therefore, the first target key and the second target key that are respectively obtained by the network device and the UE should also be consistent. With reference to the foregoing example, to be specific, Key 1=Key 2, and therefore, f(key 2, K) =f(key 1, K).

On the contrary, if the man-in-the-middle attack exists, an uplink message received by the network device is transparently transmitted by a false terminal to the network device, and a downlink message received by the UE is transparently transmitted by a false base station to the UE. Therefore, with reference to the foregoing channel key generation process based on channel measurement, it can be learned that the network device and the UE perform measurement based on different channels, and finally generated channel keys should be different, to be specific, the first channel key and the second channel key are inconsistent. Therefore, the first target key and the second target key that are respectively obtained by the network device and the UE are also inconsistent. With reference to the foregoing example, to be specific, the key 1≠the key 2, and therefore, f(key 2, K)≠f(key 1, K).

107: The network device and the UE perform integrity protection verification by using the first target key and the second target key.

The UE may decrypt a received message based on the first target key, and discard a packet of the message if the decryption fails. The network device may decrypt a received message based on the second target key, and discard a packet of the message if the decryption fails.

Correspondingly, the UE sends an uplink message to the network device, and then the network device performs integrity protection verification by using the second target key of the network device after receiving the message. The network device sends a downlink message to the UE, and then the UE performs integrity protection verification by using the first target key of the UE after receiving the message.

When no man-in-the-middle attack exists, the integrity protection verification succeeds, and no case of packet discarding occurs.

When the man-in-the-middle attack exists, the uplink message sent by the UE to the network device is transparently transmitted by the false terminal to the network device, and the network device cannot decrypt the uplink message by using the second target key. The downlink message sent by the network device to the UE is transparently transmitted by the false base station to the target UE, and the target UE cannot decrypt the downlink message by using the first target key. In this case, the integrity protection verification of the network device and the UE fails, and a packet discarding manner may be used.

In an implementation, whether the man-in-the-middle attack exists is determined by quantizing a quantity of discarded packets within preset time.

Specifically, based on the preset duration and the preset threshold in the channel key configuration information received by the UE from the network device in step 102, if the UE determines that the quantity of discarded packets within the preset duration is greater than or equal to the preset threshold, it is determined that the man-in-the-middle attack exists, and the UE may send alarm information to the network device, to indicate that the security attack or the man-in-the-middle attack exists, or indicate that a cell handover operation needs to be performed, or the like.

In a second manner, the UE encrypts and transmits the first channel key to the network device, and the network device performs channel key consistency verification.

108: The UE sends, to the network device, the first channel key encrypted by using the encryption key.

The UE encrypts the first channel key based on the encryption key configured by the network device, and sends, to the network device, the first channel key encrypted by using the encryption key.

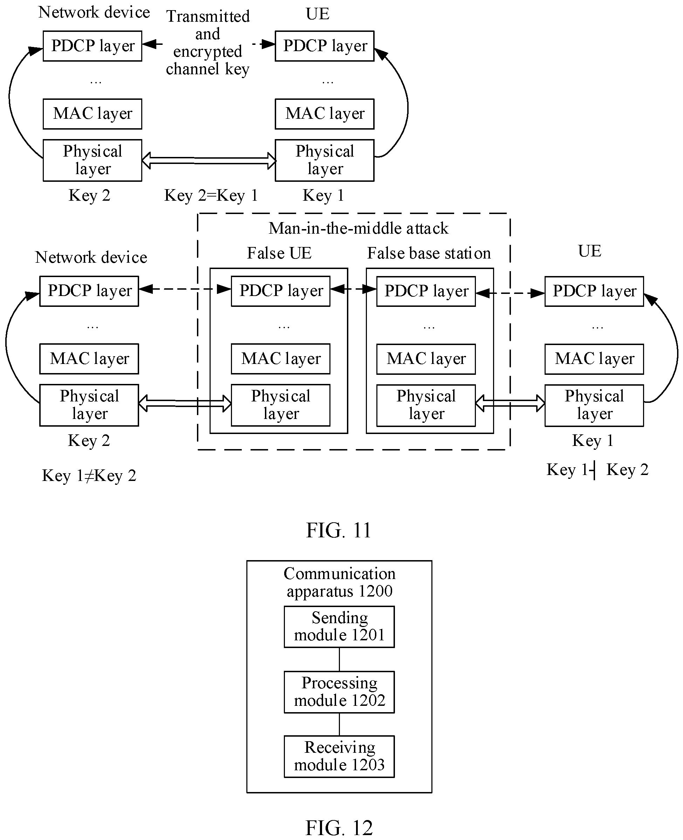

Therefore, after receiving the first channel key, the network device may decrypt the first channel key based on the encryption key K, to obtain a first channel key key 1, and then perform consistency verification on the first channel key key 1 based on a second channel key key 2 generated by the network device. If the first channel key key 1 and the second channel key key 2 are consistent, it is considered that no man-in-the-middle attack exists. If the first channel key and the second channel key are inconsistent, it is considered that the man-in-the-middle attack exists, as shown in FIG. 11.

In an implementation, if the UE determines that the first channel key does not match the second channel key, the UE sends alarm information to the network device, indicating that the security attack or the man-in-the-middle attack exists, or indicating that a cell handover operation needs to be performed, or the like.

In a third manner, the network device encrypts and transmits the second channel key to the UE, and the UE performs channel key consistency verification.

109: The network device sends, to the UE, the second channel key encrypted by using the encryption key.

The network device may encrypt a second channel key key 2 based on an encryption key K, and send, to the UE, the second channel key key 2 encrypted by using the encryption key.

Correspondingly, after receiving the second channel key key 2, the UE may decrypt the second channel key key 2 based on the encryption key K previously configured by the network device, to obtain the first channel key key 1, and then perform consistency verification on the first channel key key 1 based on the second channel key key 2 generated by the UE. If the first channel key and the second channel key are consistent, it is considered that no man-in-the-middle attack exists. If the first channel key key 1 and the second channel key key 2 are inconsistent, it is considered that the man-in-the-middle attack exists, as shown in FIG. 11.

In an implementation, if the network device determines that the first channel key does not match the second channel key, the network device sends alarm information to a core network device, indicating that the security attack or the man-in-the-middle attack exists, or indicating that a cell handover operation needs to be performed on the UE, or the like.

In the foregoing implementation, whether the man-in-the-middle attack exists can be identified between the network device and the user equipment by using the channel key generation capability, to improve the communication security and further improve user experience.

Based on the foregoing embodiments, this application further provides a communication apparatus, indicating the foregoing method performed by a user equipment or a network device. As shown in FIG. 12, the communication apparatus 1200 includes a sending module 1201, a processing module 1202, and a receiving module 1203.

Based on the implementation shown in FIG. 8, the communication apparatus 1200 may be configured to perform steps implemented by the network device.

The sending module 1201 is configured to broadcast a system information block, where the system information block indicates that channel key generation is supported, and the system information block includes a preamble and a resource configuration of a physical random access channel.

The receiving module 1203 is configured to receive, on the physical random access channel, a first message from the user equipment, where the first message includes the preamble.

The sending module 1201 is further configured to send a second message to the user equipment, and perform other operations of sending data/information by a side of the network device in the foregoing embodiments of this application, for example, step 801 and step 803. The second message includes configuration information of a first time-frequency resource.

The receiving module 1203 is further configured to receive, on the first time-frequency resource, a third message from the user equipment, and perform other operations of receiving data/information on the side of the network device in the foregoing embodiments of this application, for example, step 802 and step 805.

The processing module 1202 is configured to perform channel measurement based on the third message, to obtain a channel key, and operations other than receiving or sending data/information on the side of the network device in the foregoing embodiments of this application, for example, step 806 and step 807. The channel key is for performing data encryption and integrity protection between the network device and the user equipment before a security mode is enabled.

Correspondingly, based on the implementation shown in FIG. 8, an embodiment of this application further provides a communication apparatus 1200, and the communication apparatus 1200 may be configured to perform steps implemented by the user equipment in the foregoing embodiments.

The receiving module 1203 is configured to receive a system information block, where the system information block indicates that the network device supports channel key generation, and the system information block includes a preamble and a resource configuration of a physical random access channel.

The sending module 1201 is configured to send, on the physical random access channel, a first message to the network device, where the first message includes the preamble.

The receiving module 1203 is further configured to receive a second message from the network device, and perform other operations of receiving data/information on a side of the user equipment in the foregoing embodiments of this application, for example, step 801 and step 803. The second message includes configuration information of a first time-frequency resource.

The processing module 1202 is configured to perform channel measurement based on the second message, to obtain a channel key, and operations other than receiving or sending data/information on the side of the network device in the foregoing embodiments of this application, for example, step 804 and step 807. The channel key is for performing data encryption and integrity protection between the network device and the user equipment before a security mode is enabled.

The sending module 1201 is further configured to send, on the first time-frequency resource, a third message to the network device, and perform other operations of sending data/information on a side of the user equipment in the foregoing embodiments of this application, for example, step 802 and step 805.

In addition, based on the implementation shown in FIG. 10, an embodiment of this application further provides a communication apparatus 1200, and the communication apparatus 1200 may be configured to perform steps implemented by the user equipment in the foregoing embodiments.

The sending module 1201 is configured to send first notification information to the network device, where the first notification information indicates that the user equipment has a channel key generation capability.

The receiving module 1203 is configured to receive channel key configuration information from the network device, where the channel key configuration information includes configuration information of a reference signal and key quantization and calibration methods.

The processing module 1202 is configured to perform channel measurement based on the reference signal, to obtain a first channel key. The processing module 1202 is further configured to obtain a first target key based on the first channel key and an encryption key configured by the network device, and perform other operations other than receiving or sending data/information on a side of the network device in the foregoing embodiments of this application, for example, step 103, step 105, and step 107. The first target key is for performing data encryption and integrity protection between the network device and the user equipment.

Alternatively, the processing module 1202 is configured to encrypt the first channel key based on an encryption key configured by the network device, and the sending module 1201 is configured to send, to the network device, the first channel key encrypted by using the encryption key, and perform other operations of sending data/information by a side of the user equipment in the foregoing embodiments of this application, for example, step 101 and step 108.

Alternatively, the receiving module 1203 is configured to receive a second channel key from the network device, and perform other operations of receiving data/information on the side of the user equipment in the foregoing embodiments of this application, for example, step 102 and step 109. The second channel key is used by the communication apparatus 1200 to verify a channel key, and the second channel key is encrypted by using an encryption key.

Correspondingly, based on the implementation shown in FIG. 10, an embodiment of this application further provides a communication apparatus 1200, and the communication apparatus 1200 may be configured to perform steps implemented by the network device in the foregoing embodiments.

The receiving module 1203 is configured to receive first notification information from a user equipment, where the first notification information indicates that the user equipment has a channel key generation capability.

The sending module 1201 is configured to send channel key configuration information to the user equipment, where the channel key configuration information includes configuration information of a reference signal and key quantization and calibration methods.

The processing module 1202 is configured to perform channel measurement based on the reference signal, to obtain a second channel key. The processing module 1202 is further configured to obtain a second target key based on the second channel key and an encryption key configured for the user equipment, and perform other operations other than receiving or sending data/information on a side of the network device in the foregoing embodiments of this application, for example, step 104, step 106, and step 107. The second target key is for performing data encryption and integrity protection between the network device and the user equipment.

Alternatively, the processing module 1202 is further configured to encrypt the second channel key based on an encryption key, and the sending module 1201 is configured to send, to the user equipment, the second channel key encrypted by using the encryption key, and perform other operations of sending data/information by a side of the user equipment in the foregoing embodiments of this application, for example, step 102 and step 109.

Alternatively, the receiving module 1203 is configured to receive a first channel key from the user equipment, and perform other operations of receiving data/information on the side of the network device in the foregoing embodiments of this application, for example, step 101 and step 108. The first channel key is used by the communication apparatus 1200 to verify a channel key, and the first channel key is encrypted by using an encryption key.

In a simple embodiment, a person skilled in the art may figure out that the communication apparatus 1200 may be in the form shown in FIG. 7. For example, the processor 701 in FIG. 7 may invoke the computer-executable instructions stored in the memory 703, to enable the communication apparatus 1200 to perform the method performed by each communication apparatus in the foregoing method embodiments.

For example, functions/implementation processes of the sending module 1201 and the receiving module 1203 in FIG. 12 may be implemented by the processor 701 in FIG. 7 by invoking the computer-executable instructions stored in the memory 703. Alternatively, a function/an implementation process of the processing module 1202 in FIG. 12 may be implemented by the processor 701 by invoking the computer-executable instructions stored in the memory 703 in FIG. 7, and functions/implementation processes of the sending module 1201 and the receiving module 1203 in FIG. 12 may be implemented by using the communication interface 704 in FIG. 7.

It should be noted that one or more of the foregoing modules or units may be implemented by software, hardware, or a combination thereof. When any one of the foregoing modules or units is implemented by software, the software exists in a form of computer program instructions, and is stored in the memory. The processor may be configured to execute the program instructions and implement the foregoing method procedures. The processor may be built into a SoC (system on chip) or an ASIC, or may be an independent semiconductor chip. In addition to a core configured to perform calculation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including: at least one processor and an interface. The at least one processor is coupled to a memory through an interface. When the at least one processor executes a computer program or instructions in the memory, the method in any one of the foregoing method embodiments is performed. In a possible implementation, the chip system further includes the memory. Optionally, the chip system may include a chip, or may include a chip and another discrete component. This is not specifically limited in this embodiment of this application.

Optionally, an embodiment of this application further provides a computer-readable storage medium. All or some of the procedures in the foregoing method embodiments may be implemented by a computer program instructing related hardware. The program may be stored in the computer-readable storage medium. When the program is executed, the procedures of the foregoing method embodiments may be included. The computer-readable storage medium may be an internal storage unit of the communication apparatus in any one of the foregoing embodiments, for example, a hard disk or memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are required by the communication apparatus. The computer-readable storage medium may be further configured to temporarily store data that has been output or is to be output.

Optionally, an embodiment of this application further provides a computer program product. All or some of the procedures in the foregoing method embodiments may be implemented by a computer program instructing related hardware. The program may be stored in the computer program product. When the program is executed, the procedures of the foregoing method embodiments may be included.

Optionally, an embodiment of this application further provides computer instructions. All or some of the procedures in the foregoing method embodiments may be implemented by computer instructions instructing related hardware (such as a computer, a processor, an access network device, a mobility management network element, or a session management network element). The program may be stored in the computer-readable storage medium or the computer program product. Based on the foregoing descriptions of the implementations, a person skilled in the art may clearly understand that for the purpose of convenient and brief descriptions, division into the foregoing functional modules is merely used as an example for descriptions. During actual application, the foregoing functions can be allocated to different functional modules for implementation based on a requirement, in other words, an inner structure of an apparatus is divided into different functional modules to implement all or a part of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, in other words, may be located in one place, or may be distributed on different places. Some or all of the units may be selected based on actual requirements to achieve the objectives of the solutions in embodiments.

In addition, function units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A channel key-based encryption method, applied to a network device, wherein the method comprises:

   broadcasting a system information block, indicating that channel key generation is supported, wherein the system information block comprises a preamble and a resource configuration of a physical random access channel;
   receiving, on the physical random access channel, a first message from a user equipment, wherein the first message comprises the preamble;
   sending a second message to the user equipment, wherein the second message comprises configuration information of a first time-frequency resource;
   receiving, on the first time-frequency resource, a third message from the user equipment; and
   performing channel measurement based on the third message, to obtain a channel key, wherein the channel key is for performing data encryption and integrity protection between the network device and the user equipment before a security mode is enabled.

2. The method according to claim 1, wherein the method further comprises:
   determining, based on the first message, that the user equipment has a channel key generation capability.

3. The method according to claim 1 or 2, wherein the performing channel measurement based on the third message, to obtain a channel key specifically comprises:
   performing channel measurement based on a demodulation reference signal in the second message, to obtain the channel key.

4. A channel key-based encryption method, applied to a user equipment, wherein the method comprises:

   receiving a system information block, wherein the system information block indicates that a network device supports channel key generation, and the system information block comprises a preamble and a resource configuration of a physical random access channel;
   sending, on the physical random access channel, a first message to the network device, wherein the first message comprises the preamble;
   receiving a second message from the network device, wherein the second message comprises configuration information of a first time-frequency resource;
   performing channel measurement based on the second message, to obtain a channel key, wherein the channel key is for performing data encryption and integrity protection between the network device and the user equipment before a security mode is enabled; and
   sending, on the first time-frequency resource, a third message to the network device.

5. The method according to claim 4, wherein the performing channel measurement based on the second message, to obtain a channel key specifically comprises:
   performing channel measurement based on a demodulation reference signal in the second message, to obtain the channel key.

6. A channel key-based encryption method, applied to a user equipment, wherein the method comprises:

    sending first notification information to a network device, wherein the first notification information indicates that the user equipment has a channel key generation capability;

    receiving channel key configuration information from the network device, wherein the channel key configuration information comprises configuration information of a reference signal and key quantization and calibration methods;

    performing channel measurement based on the reference signal, to obtain a first channel key; and

    obtaining a first target key based on the first channel key and an encryption key configured by the network device, wherein the first target key is for performing data encryption and integrity protection between the network device and the user equipment; or

    encrypting the first channel key based on an encryption key configured by the network device, and sending, to the network device, the first channel key encrypted by using the encryption key; or

    receiving, from the network device, a second channel key used by the user equipment to verify a channel key, wherein the second channel key is encrypted by using an encryption key.

7. The method according to claim 6, wherein before the sending first notification information to a network device, the method comprises:

    receiving first request information from the network device, wherein the first request information is for requesting the user equipment to report whether the channel key generation capability is supported.

8. The method according to claim 6 or 7, wherein before the sending first notification information to a network device, the method comprises:

    successfully setting up an RRC connection to the network device, to receive the encryption key and an integrity protection key from the network device.

9. The method according to any one of claims 6 to 8, wherein the method further comprises:

    decrypting a received message based on the first target key, and discarding a packet of the message if the decryption fails.

10. The method according to claim 9, wherein the channel key configuration information further comprises at least one of preset duration or a preset threshold, the preset duration is a threshold that is of packet discarding duration and that is for determining whether a security attack exists, and the preset threshold is a threshold that is of a quantity of discarded packets and that is for determining whether the security attack exists.

11. The method according to claim 9 or 10, wherein the method further comprises:

    if a quantity of discarded packets within the preset duration reaches or exceeds the preset threshold, sending alarm information to the network device, indicating that the security attack exists.

12. The method according to any one of claims 6 to 8, wherein the method further comprises:

    if it is determined that the first channel key does not match the second channel key, sending alarm information to the network device, indicating that a security attack exists.

13. The method according to any one of claims 6 to 12, wherein the channel key configuration information further comprises a preset periodicity, indicating a time interval for updating the channel key.

14. A channel key-based encryption method, applied to a network device, wherein the method comprises:

    receiving first notification information from a user equipment, wherein the first notification information indicates that the user equipment has a channel key generation capability;

    sending channel key configuration information to the user equipment, wherein the channel key configuration information comprises configuration information of a reference signal and key quantization and calibration methods;

    performing channel measurement based on the reference signal, to obtain a second channel key; and

    obtaining a second target key based on the second channel key and an encryption key configured for the user equipment, wherein the second target key is for performing data encryption and integrity protection between the network device and the user equipment; or

    encrypting the second channel key based on an encryption key, and sending, to the user equipment, the second channel key encrypted by using the encryption key; or
receiving a first channel key that is from the user equipment and that is used by the network device to verify a channel key, wherein the first channel key is encrypted by using an encryption key.

15. The method according to claim 14, wherein before the receiving first notification information from a user equipment, the method further comprises:
sending first request information to the network device, wherein the first request information is for requesting the user equipment to report whether the channel key generation capability is supported.

16. The method according to claim 14 or 15, wherein before the receiving first notification information from a user equipment, the method further comprises:
successfully setting up an RRC connection to the user equipment, to send a corresponding encryption key and integrity protection key to the user equipment.

17. The method according to any one of claims 14 to 16, wherein the method further comprises:
decrypting a received message based on the second target key, and discarding a packet of the message if the decryption fails.

18. The method according to claim 17, wherein the channel key configuration information further comprises at least one of preset duration or a preset threshold, the preset duration is a threshold that is of packet discarding duration and that is for determining whether a security attack exists, and the preset threshold is a threshold that is of a quantity of discarded packets and that is for determining whether the security attack exists.

19. The method according to claim 17 or 18, wherein the method further comprises:
if a quantity of discarded packets within the preset duration reaches or exceeds the preset threshold, determining that the security attack exists.

20. The method according to any one of claims 14 to 16, wherein the method further comprises:
if it is determined that the first channel key does not match the second channel key, determining a the security attack exists.

21. The method according to any one of claims 14 to 20, wherein the channel key configuration information further comprises a preset periodicity, indicating a time interval for updating the channel key.

22. A communication apparatus, wherein the communication apparatus comprises a processor and a transmission interface, wherein
the processor is configured to execute instructions stored in a memory, to enable the apparatus to perform the method according to any one of claims 1 to 21.

23. A computer-readable storage medium, comprising a program or instructions, wherein when the program or the instructions are run by a processor, the method according to any one of claims 1 to 21 is performed.

24. A computer program product, wherein when the computer program product runs on a computer or a processor, the computer or the processor is enabled to perform the method according to any one of claims 1 to 21.

25. A communication apparatus, configured to perform the method according to any one of claims 1 to 3.

26. A communication apparatus, configured to perform the method according to claim 4 or 5.

27. A communication apparatus, configured to perform the method according to any one of claims 6 to 13.

28. A communication apparatus, configured to perform the method according to any one of claims 14 to 21.

29. A communication system, wherein the communication system comprises the apparatus according to claim 25 and the apparatus according to claim 26; or the communication system comprises the apparatus according to claim 27 and the apparatus according to claim 28.

30. A channel key-based encryption method, wherein the method comprises:

broadcasting, by a network device, a system information block, indicating that channel key generation is supported, wherein the system information block comprises a preamble and a resource configuration of a physical random access channel;

receiving, by a user equipment, the system information block;

sending, by the user equipment on the physical random access channel, a first message to the network device, wherein the first message comprises the preamble;

receiving, by the network device on the physical random access channel, the first message;

sending, by the network device, a second message to the user equipment, wherein the second message comprises configuration information of a first time-frequency resource;

receiving, by the user equipment, the second message;

performing, by the user equipment, channel measurement based on the second message, to obtain a channel key, wherein the channel key is for performing data encryption and integrity protection between the network device and the user equipment before a security mode is enabled;

sending, by the user equipment on the first time-frequency resource, a third message to the network device;

receiving, by the network device on the first time-frequency resource, the third message; and

performing, by the network device, channel measurement based on the third message, to obtain a channel key, wherein the channel key is for performing data encryption and integrity protection between the network device and the user equipment before the security mode is enabled.

31. A channel key-based encryption method, wherein the method comprises:

sending, by a user equipment, first notification information to a network device, wherein the first notification information indicates that the user equipment has a channel key generation capability;

receiving, by the network device, the first notification information;

sending, by the network device, channel key configuration information to the user equipment, wherein the channel key configuration information comprises configuration information of a reference signal and key quantization and calibration methods;

receiving, by the user equipment, the channel key configuration information;

performing, by the user equipment, channel measurement based on the reference signal, to obtain a first channel key;

obtaining, by the user equipment, a first target key based on the first channel key and an encryption key configured by the network device, wherein the first target key is for performing data encryption and integrity protection between the network device and the user equipment; or encrypting, by the user equipment, the first channel key based on an encryption key configured by the network device, and sending, to the network device, the first channel key encrypted by using the encryption key; or receiving, by the user equipment from the network device, a second channel key used by the user equipment to verify a channel key, wherein the second channel key is encrypted by using an encryption key;

performing, by the network device, channel measurement based on the reference signal, to obtain the second channel key; and

obtaining, by the network device, a second target key based on the second channel key and an encryption key configured for the user equipment, wherein the second target key is for performing data encryption and integrity protection between the network device and the user equipment; or encrypting, by the network device, the second channel key based on an encryption key, and sending, to the user equipment, the second channel key encrypted by using the encryption key; or receiving, by the network device, the first channel key that is from the user equipment and that is used by the network device to verify a channel key, wherein the first channel key is encrypted by using an encryption key.

FIG. 1

FIG. 2

FIG. 3

FIG. 4

Terminal | Base station | AMF

1: The terminal sends an RRC setup request to the base station

2: The base station sends an RRC setup response to the terminal

2a: The terminal sends an RRC setup complete response to the base station

3: The base station sends an initial UE message to the AMF network element

4: The AMF network element may send a downlink message to a UE

4a: The base station sends the downlink message to the terminal

5: The terminal sends an uplink message to the base station

5a: The base station sends the uplink message to the AMF

6: The AMF network element sends an initial context setup request to the base station

7: The base station sends a security key to the terminal

FIG. 5A

Transmitter

Transmission
Bearer    direction
ID
PDCP
packet count          Message
Integrity
protection key      NIA

MAC-I

Receiver

Transmission
Bearer    direction
ID
PDCP
packet count          Message
Integrity
protection key      NIA

XMAC-I

FIG. 5B

FIG. 6

FIG. 7

| Network device | | UE |
|---|---|---|

801: The network device broadcasts
a system information block

802: The UE sends a first message
to the network device

803: The network device sends a
second message to the UE

804: The UE performs channel
measurement based on the second
message, to obtain a channel key

805: The UE sends a third message
to the network device

806: The network device performs
channel measurement based on the
third message, to obtain a channel key

807: Encrypt and transmit information between the UE
and the network device by using the channel keys

FIG. 8

| R | TAC | |
|---|---|---|
| TAC | | UL grant |
| UL grant | | |
| UL grant | | |
| UL grant | | |
| Temporary C-RNTI | | |
| Temporary C-RNTI | | |

FIG. 9

```
┌─────────────┐                              ┌─────────────┐
│     UE      │                              │   Network   │
│             │                              │   device    │
└─────────────┘                              └─────────────┘
```

100: The network device sends first request information to the UE, to request the UE to report whether a channel key generation capability is supported

101: The UE sends first notification information to the network device, indicating that the UE has the channel key generation capability

102: The network device sends channel key configuration information to the UE

103: The UE performs channel measurement based on a reference signal indicated in the channel key configuration information, to obtain a first channel key

104: The network device performs channel measurement based on the reference signal, to obtain a second channel key

105: The UE obtains a first target key based on the first channel key and an encryption key configured by the network device

106: The network device obtains a second target key based on the second channel key and the encryption key

107: The network device and the UE perform integrity protection verification by using the first target key and the second target key

108: The UE sends, to the network device, the first channel key encrypted by using the encryption key

109: The network device sends, to the UE, the second channel key encrypted by using the encryption key

FIG. 10

Network device    Transmitted    UE
                  and
                  encrypted
                  channel key

Key 2        Key 2=Key 1    Key 1

Man-in-the-middle attack

Network device    False UE    False base station    UE

Key 2                                                 Key 1

Key 1≠Key 2                                    Key 1┤ Key 2

FIG. 11

Communication
apparatus 1200

Sending
module 1201

Processing
module 1202

Receiving
module 1203

FIG. 12

## INTERNATIONAL SEARCH REPORT

| | International application No. |
|---|---|
| | **PCT/CN2023/083123** |

### A. CLASSIFICATION OF SUBJECT MATTER

H04W 12/033(2021.01)i

According to International Patent Classification (IPC) or to both national classification and IPC

### B. FIELDS SEARCHED

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

WPABS; DWPI; CNTXT; ENTXT; CNKI; 3GPP: 密钥, 秘钥, UE, 支持, 能力, 系统信息, SIB, 测量, 参考信号, DMRS, 随机接入, RACH, 物理层, 物理信道, 完整性保护, MAC-I, key, support, capability, measur+, physical layer, physical 3d channel, integrity

### C. DOCUMENTS CONSIDERED TO BE RELEVANT

| Category* | Citation of document, with indication, where appropriate, of the relevant passages | Relevant to claim No. |
|---|---|---|
| A | CN 107196920 A (INFORMATION ENGINEERING UNIVERSITY OF PLA) 22 September 2017 (2017-09-22)<br>entire document | 1-31 |
| A | US 2022007182 A1 (APPLE INC.) 06 January 2022 (2022-01-06)<br>entire document | 1-31 |
| A | WO 2022030972 A1 (SAMSUNG ELECTRONICS CO., LTD.) 10 February 2022 (2022-02-10)<br>entire document | 1-31 |
| A | US 2019335332 A1 (HUAWEI TECHNOLOGIES CO., LTD.) 31 October 2019 (2019-10-31)<br>entire document | 1-31 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 June 2023** | **19 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
|---|
| **PCT/CN2023/083123** |

| Patent document cited in search report | | | Publication date (day/month/year) | Patent family member(s) | | | Publication date (day/month/year) |
|---|---|---|---|---|---|---|---|
| CN | 107196920 | A | 22 September 2017 | None | | | |
| US | 2022007182 | A1 | 06 January 2022 | WO | 2020092542 | A1 | 07 May 2020 |
| WO | 2022030972 | A1 | 10 February 2022 | KR | 20230047103 | A | 06 April 2023 |
| | | | | EP | 4144115 | A1 | 08 March 2023 |
| US | 2019335332 | A1 | 31 October 2019 | WO | 2018126452 | A1 | 12 July 2018 |
| | | | | EP | 3849227 | A1 | 14 July 2021 |
| | | | | EP | 3557898 | A1 | 23 October 2019 |
| | | | | EP | 3557898 | A4 | 30 October 2019 |
| | | | | EP | 3557898 | B1 | 25 November 2020 |
| | | | | WO | 2018126534 | A1 | 12 July 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210296528